# EUROPÄISCHE PATENTSCHRIFT

(11) **EP 3 704 799 B1**
(45) Veröffentlichungstag und Bekanntmachung des Hinweises auf die Patenterteilung: **05.10.2022**
(21) Anmeldenummer: 18796361.6
(22) Anmeldetag: 18.10.2018
(51) Int. Cl.: H04B 5/00, H02J 50/12, B60L 53/12, B60L 53/30

(54) **SYSTEM ZUR BERÜHRUNGSLOSEN ÜBERTRAGUNG VON ELEKTRISCHER ENERGIE AN EIN MOBILTEIL**
SYSTEM FOR NON-CONTACT TRANSMISSION OF ELECTRICAL ENERGY TO A MOBILE PART
SYSTÈME DE TRANSMISSION SANS CONTACT D'ÉNERGIE ÉLECTRIQUE À UN ÉLÉMENT MOBILE

(30) Priorität: 03.11.2017 DE 102017010217
(43) Veröffentlichungstag der Anmeldung: 09.09.2020
(73) Patentinhaber: SEW-EURODRIVE GmbH & Co. KG, 76646 Bruchsal (DE)
(72) Erfinder: BÖSER, Andreas, 76646 Bruchsal (DE); KREMPEL, Thomas, 76707 Hambrücken (DE); EGGER, Björn, 76646 Bruchsal (DE); JAHN, Nils-Malte, 69207 Sandhausen (DE)
(86) Internationale Anmeldenummer: PCT/EP2018/025269
(87) Internationale Veröffentlichungsnummer: WO 2019/086143

(56) Entgegenhaltungen:
- EP-A1- 2 842 866
- DE-A1-102014 000 347
- GB-A- 2 529 197
- JP-A- H09 268 739
- KR-A- 20160 135 609
- US-A1- 2009 295 223

## Beschreibung

Die Erfindung betrifft ein System zur berührungslosen Übertragung von elektrischer Energie an ein Mobilteil.

Es ist allgemein bekannt, über eine induktive Kopplung elektrische Energie einem Energiespeicher eines Mobilteils von einer stationär angeordneten Primärwicklung zuzuführen.

Aus der EP 2 842 866 A1 ist als nächstliegender Stand der Technik ein Bodensystem bekannt.

Aus der US 2009/295223 A1 ist ein System zur kontaktlosen Übertragung von Daten und Leistung bekannt.

Aus der GB 2 529 197 A ist ein Dachbodensystem bekannt.

Aus der KR 2016 0135609 A sind plattenartige Strukturen bekannt.

Aus der JP H09 268739 A sind Fußbodenplatten bekannt.

Der Erfindung liegt daher die Aufgabe zugrunde, eine einfach herstellbare Anordnung zur berührungslosen Energieübertragung herzstellen.

Erfindungsgemäß wird die Aufgabe bei dem System nach den in Anspruch 1 angegebenen Merkmalen gelöst.

Wichtige Merkmale der Erfindung bei dem System sind, dass das System zur berührungslosen Übertragung von elektrischer Energie an ein Mobilteil vorgesehen ist, wobei das System einen Doppelboden aufweist, in welchem ein Primärteil angeordnet ist.

Von Vorteil ist dabei, dass ein Primärteil in einem Doppelboden anordenbar ist. Somit ist eine besonders einfache Umrüstung ausführbar. Denn wenn das Primärteil an eine andere Stelle des Doppelbodens umgeordnet werden soll, ist es sehr einfach ausführbar, die Versorgungskabel des im Doppelboden an die andere Stelle heranzuführen, also entsprechend umzuverlegen, und das Primärteil an dieser anderen Stelle einzubauen, also eine entsprechend lokalisierte Bodenplatte herauszunehmen und eine mit dem Primärteil versehene Bodenplatte einzubauen.

**Erfindungsgemäß** weist der Doppelboden eine erste Bodenplatte und zweite Bodenplatten, Tragelemente, Stützen und einen Rohboden auf,
wobei die Bodenplatten von Tragelementen, insbesondere einen Unterboden bildenden Tragelementen, aufgenommen sind,
wobei die Tragelemente von Stützen über einem Rohboden gehalten sind. Von Vorteil ist dabei, dass die erste Bodenplatte statt einer jeweiligen zweiten Bodenplatte anordenbar sind. Denn die jeweilige Aufnahme für die jeweilige zweite Bodenplatte ist auch als Aufnahme für die erste Bodenplatte verwendbar. Die für die zweiten Bodenplatten definierte Schnittstelle ist also auch zur ersten Bodenplatte passend. Dabei ist die Schnittstelle durch die geometrischen Abmessungen der Aufnahme, also des aufnehmenden Bereichs der Tragelemente des Unterbodens, definiert.

Bei einer vorteilhaften Ausgestaltung sind die Stützen und Tragelemente aus Metall gefertigt, insbesondere aus Stahl gefertigt. Von Vorteil ist dabei, dass eine hohe Tragfähigkeit realisiert ist. Somit ist die erste Bodenplatte auch aus Metall anstatt Holz ausführbar und/oder die erste Bodenplatte ist mit einem Primärteil und/oder einem Einspeisegerät ausstattbar.

**Erfindungsgemäß** ist die erste Bodenplatte aus Aluminium gefertigt. Von Vorteil ist dabei, dass eine gute Aufspreizung des von dem Primärteil erzeugten Wärmestroms erreichbar ist. Somit ist eine gute Ableitung der Wärme an die Umgebung, insbesondere auch über die Stützen und/oder Tragelemente, gewährleistbar.

**Erfindungsgemäß** ist an der Unterseite der ersten Bodenplatte ein Aufnahmering, Rippen und ein Rahmen, insbesondere umlaufenden und/oder geschlossenen Rahmen, ausgeformt, insbesondere wobei die Rippen vom Aufnahmering sternstrahlenförmig in radialer Richtung zum Rahmen verlaufen. Von Vorteil ist dabei, dass eine Versteifung erreichbar ist und somit eine erhöhte Tragfähigkeit bewirkbar ist. Daher ist sogar ein Einspeisegerät am Primärteil anordenbar und anhängbar.

**Erfindungsgemäß** ist der Aufnahmering vom Rahmen beabstandet. Von Vorteil ist dabei, dass nicht die gesamte erste Bodenplatte, sondern nur der innere Aufnahmering sowie der äußere Rahmen und die verbindenden Rippen verdickt ausgeführt werden müssen, wohingegen die restliche erste Bodenplatte mit geringem Materialeinsatz bewirkbar ist.

Bei einer vorteilhaften Ausgestaltung sind die Rippen in Umfangsrichtung regelmäßig voneinander beabstandet. Von Vorteil ist dabei, dass eine gleichmäßige Auslastung erreichbar ist.

Bei einer vorteilhaften Ausgestaltung sind die Stützen längenveränderlich ausgeführt, insbesondere jede Stütze zwei miteinander schraubverbundene Stützenteile aufweisen. Von Vorteil ist dabei, dass eine Anpassung an den Rohboden ermöglicht ist und somit ein Ausgleichen von Unebenheiten des Rohbodens ausführbar ist, so dass die erste und die zweite Bodenplatte an ihrer Oberseite eine mit hoher Präzision ebene Verfahrfläche dem Mobilteil zur Verfügung stellen.

Erfindungsgemäß weist das Primärteil ein Aufnahmeteil und ein Oberteil auf, wobei das Oberteil im Aufnahmeteil aufgenommen ist und im Oberteil eine Primärwicklung angeordnet ist. Von Vorteil ist dabei, dass das Oberteil aus einem nichtmagnetischen Material, wie Kunststoff fertigbar ist und das Aufnahmeteil aus Metall. Somit ist vom Aufnahmeteil die Wärme schnell ableitbar an die Umgebung. Das von der Primärwicklung erzeugte Magnetfeld durchdringt jedoch das nicht-magnetische Material des Oberteils ungehindert.

**Erfindungsgemäß** ist das Oberteil aus Kunststoff gefertigt. Von Vorteil ist dabei, dass das von der innerhalb des Oberteils oder an dem Oberteil angeordneten Primärwicklung erzeugte Magnetfeld ungehindert durch das Oberteil durchdringt und somit ohne wesentliche Verluste in der Sekundärwicklung Spannung induziert.

**Erfindungsgemäß** ist das Aufnahmeteil aus Aluminium gefertigt. Von Vorteil ist dabei, dass eine magnetische Abschirmung gegen den unteren Bereich des Doppelbodens vorsehbar ist. Somit sind die Stahlteile, wie Stützen und Tragteile magnetisch abgeschirmt gegen denjenigen Raumbereich, in welchem die Primärwicklung angeordnet ist.

Erfindungsgemäß ist das Primärteil, insbesondere das Aufnahmeteil, im Aufnahmering aufgenommen. Von Vorteil ist dabei, dass das Aufnahmeteil einerseits die magnetische Abschirmung gegen den unteren Bereich des Doppelbodens bewirkt und andererseits die Verlustwärme der Primärwicklung aufspreizt und abführt. Dabei ist besonders vorteilhaft, dass das Aufnahmeteil vom Aufnahmering aufgenommen ist und somit diesen berührt. Der durch diesen gut wärmeleitenden Wärmeübergang durchfließende Wärmestrom wird dann durch die Rippen und den Rahmen weitergeleitet sowie durch die Tragelemente und Stützen. Somit ist eine große Wärmekapazität wärmeleitend mit dem Aufnahmering verbunden und die in den Aufnahmering eingeleitete Wärme wird von der Wärmekapazität aufgespreizt und über die Wärmekapazität abgeleitet an die Umgebung.

Bei einer vorteilhaften Ausgestaltung weist das Oberteil eine Primärwicklung auf, insbesondere im Oberteil die Primärwicklung integriert ist. Von Vorteil ist dabei, dass eine hohe Integrationsdichte erreichbar ist und somit eine kompakte Lösung einfach herstellbar ist. Außerdem ist das Oberteil aus Kunststoff ausführbar und somit sind die von der Primärwicklung erzeugten Magnetfelder ungehindert durchleitbar.

Bei einer vorteilhaften Ausgestaltung ist am Primärteil ein Einspeisegerät angeordnet,
wobei das Einspeisegerät mittels eines Kabels versorgt ist und einen Umrichter aufweist, welcher an seinem wechselspannungsseitigen Anschluss mit einem als Gyrator ausgeführten Vierpol verbunden ist, dessen Bauteile, wie Kondensator und Induktivität, resonant auf die Frequenz der am wechselspannungsseitigen Anschluss bereit gestellten Wechselspannung abgestimmt ist,
wobei die Ausgangsseite des Vierpols die Primärwicklung speist. Von Vorteil ist dabei, dass die erste Bodenplatte mittels ihrer Versteifungsmaßnahmen, also durch Ausformung eines Rahmens, Ausformung von Rippen und Ausformung eines inneren Aufnahmerings sehr tragfähig ausgeführt ist.

Weitere Vorteile ergeben sich aus den Unteransprüchen.

Die Erfindung wird nun anhand von schematischen Abbildungen näher erläutert:

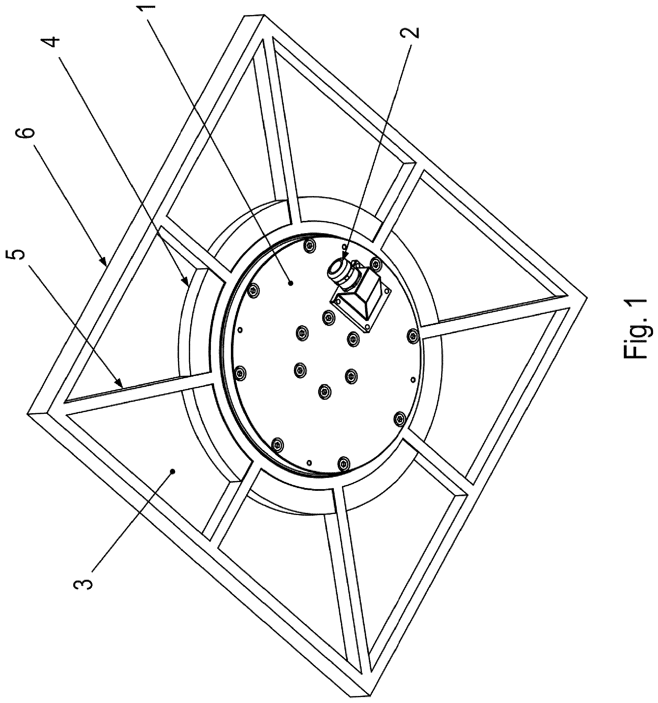

In der Figur 1 ist eine erste Bodenplatte 3 eines erfindungsgemäßen Systems zur induktiven Energieübertragung mit Doppelboden Schrägansicht gezeigt.
In Figur 2 ist ein Querschnitt durch den Doppelboden dargestellt, wobei an einem in der ersten Bodenplatte 3 angeordneten Primärteil 1 ein Einspeisegerät 24 angeordnet ist.

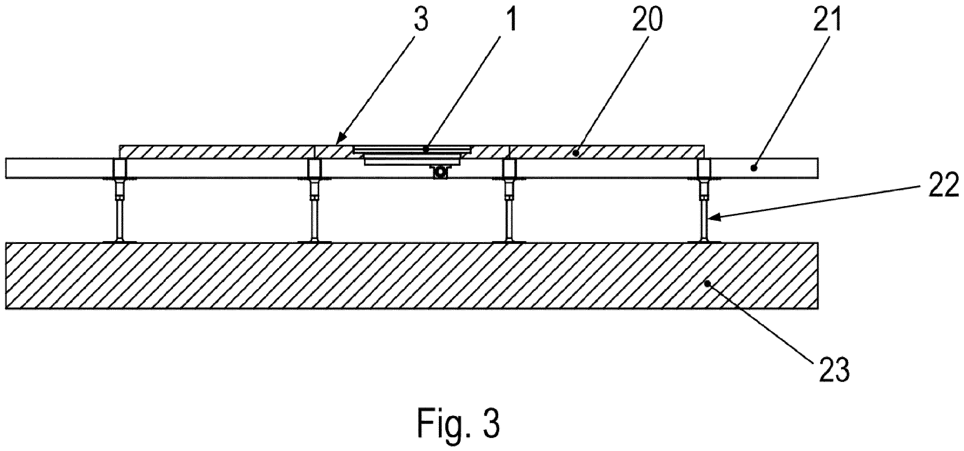

In Figur 3 ist ein Querschnitt durch den Doppelboden ohne das Einspeisegerät 24 dargestellt.

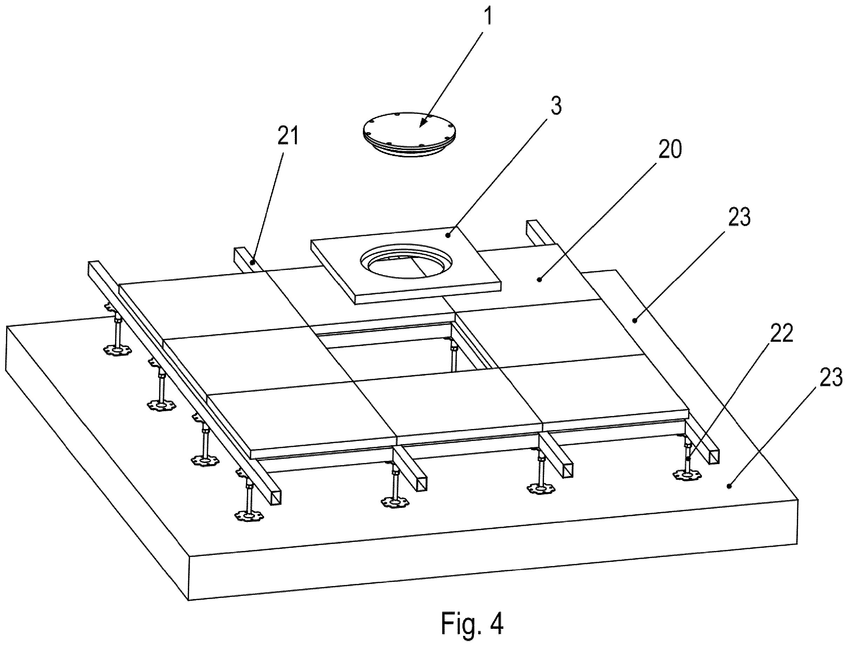

In der Figur 4 ist eine Schrägansicht auf den Doppelboden dargestellt, wobei die erste Bodenplatte 3 samt Primärteil 1 explodiert dargestellt sind.

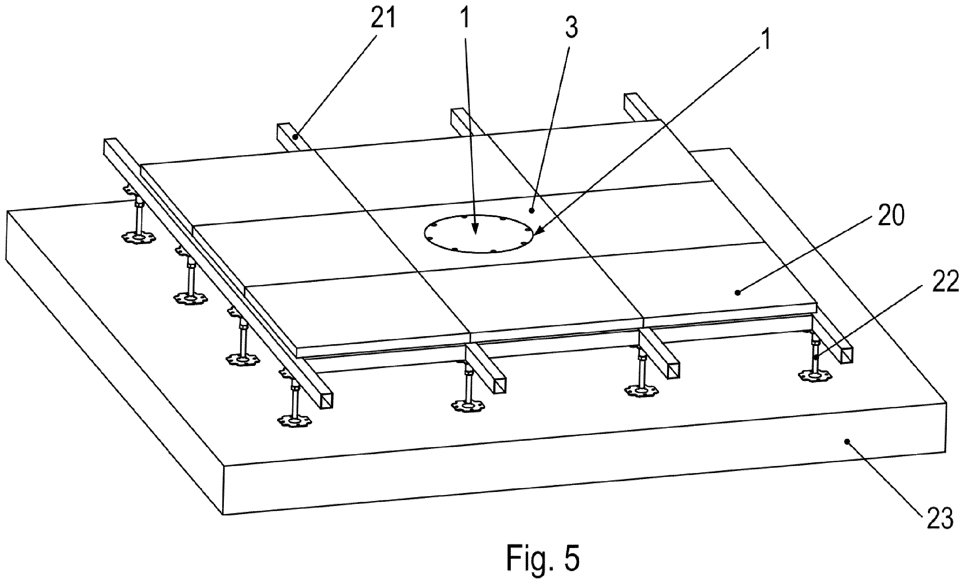

In der Figur 5 ist eine Schrägansicht auf den Doppelboden mit eingebauter erster Bodenplatte 3 dargestellt.

Wie in den Figuren dargestellt, weist der Doppelboden zweite Bodenplatten 20 auf, welche in einen Unterboden bildenden Tragelementen 21 aufgenommen sind, und somit den von einem Mobilteil befahrbaren Boden bilden.

Die zweite Bodenplatten 20 sind regelmäßig angeordnet und von jeweiligen Tragelementen 21 aufgenommen, welche mittels längenverstellbaren Stützen 22 über einem Rohboden 23 gehalten werden. Auf diese Weise ist ein genaues Ausrichten der zweiten Bodenplatten 20 ausführbar.

Die zweiten Bodenplatten 20 sind vorzugsweise zumindest teilweise aus einem nichtmetallischen Material, wie beispielsweise Holz, Kunststoff und/oder Gips.

Eine der zweiten Bodenplatten 20 ist an einer Stelle ersetzt durch eine erste Bodenplatte 3. Diese ersten Bodenplatte 3 ist vorzugsweise aus Metall, insbesondere Aluminium, gefertigt und weist an ihrer Unterseite Verdickungen auf, welche als Aufnahmering 4, als Rippen 5 und als Rahmen 6 ausgeformt sind. Somit ist die Tragfähigkeit der ersten Bodenplatte 3 sehr hoch. Denn der Rahmen 6 ist am äußeren Umfangsbereich der ersten Bodenplatte ausgebildet und der Aufnahmering 4 innerhalb dieses Rahmens 6, Rippen verbinden den Rahmen 6 mit dem Aufnahmering 4.

Mittig im Aufnahmering 4 ist eine durch die erste Bodenplatte 3 durchgehende Ausnehmung ausgebildet, in welcher ein Primärteil 1 aufgenommen ist.

Das Primärteil weise eine integrierte Primärwicklung auf, welche mit einem Wechselstrom beaufschlagbar ist.

Ein auf dem Boden verfahrbar angeordnetes Mobilteil, insbesondere Fahrzeug oder automatisch geführtes Mobilteil, weist an seiner Unterseite eine Sekundärwicklung auf, welche mit der Primärwicklung des Primärteils 1 induktiv koppelbar ist.

Die induzierte Spannung wird im Mobilteil gleichgerichtet und speist einen Energiespeicher des Mobilteils.

Die Primärwicklung wird von einem Einspeisegerät 24 gespeist, welches hierzu einen Umrichter aufweist, der eine Wechselspannung zur Verfügung stellt, die einen Gyrator speist, dessen Bauteile, wie Kondensatoren und Induktivitäten, resonant auf die Frequenz der Wechselspannung abgestimmt sind. Somit wird das spannungsquellenartige Verhalten der Ausgangsseite des Umrichters in ein stromquellenartiges Verhalten der Ausgangsseite des Gyrators gewandelt. Aus der Ausgangsseite des Gyrators ist die Primärwicklung entweder direkt oder über einen Transformator gespeist.

Das Primärteil 1 ist schraubverbunden mit der ersten Bodenplatte 3 oder mit einem, die erste Bodenplatte 3 aufnehmenden Tragelement 21.

An der Unterseite des Primärteils ist eine Kabelzuführung 2 angeordnet, so dass von der Unterseite her ein Wechselstrom zur Primärwicklung zuführbar ist.

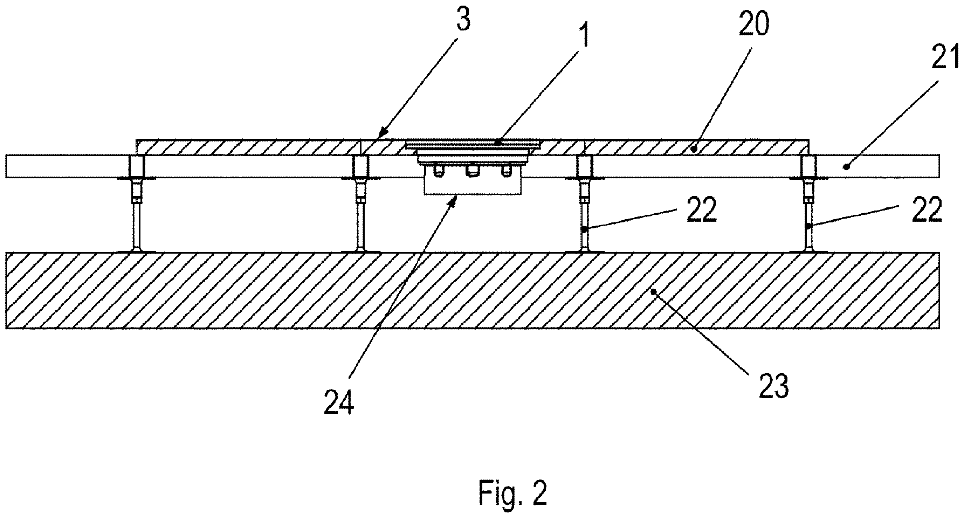

Bei dem in Figur 2 gezeigten direkten Anbau des Einspeisegeräts 24 an die Unterseite des Primärteils 1 ist die Zuführung von Wechselstrom direkt ausführbar, insbesondere alternativ auch durch eine Steckverbindung zwischen Primärteil 1 und Einspeisegerät 24.

Das Primärteil 1 und/oder das Einspeisegerät 24 weisen an ihrem äußeren Umfang zumindest teilweise ein metallisches gehäusebildendes Teil, also Gehäuseteil, auf. Somit ist eine wärmeleitende Verbindung zwischen Primärteil 1 und erster Bodenplatte 3 vorhanden. Bei direkt angebautem Einspeisegerät ist ebenfalls ein Wärmeübergang über das Primärteil zur ersten Bodenplatte 3 gewährleistet. Somit dient die erste Bodenplatte 3 auch zur Aufspreizung der Wärme und Ableitung an die Umgebung. Zusätzlich wird auch ein Teil des Wärmestroms über die Tragelemente 21 aufgespreizt und abgeleitet, da die Tragelemente aus Metall gefertigt sind.

Da ebenso die Stützen 22 aus Metall gefertigt sind, ist auch hierdurch eine Wärmeaufspreizung und - Ableitung erreichbar. Die Stützen 22 sind längenverstellbar.

Die Oberseite des Primärteils 1 ist bündig angeschlossen an die Oberseite der ersten Bodenplatte 3. Somit ist ein ungehindertes Überfahren durch das Mobilteil, insbesondere mit den Rädern des Mobilteils, ermöglicht.

Die Verwendung von Aluminium bewirkt außerdem eine magnetisch abschirmende Wirkung bezüglich der von der Primärwicklung bewirkten Wechselmagnetfelder.

Die Oberseite des Primärteils ist aus Kunststoff ausgeführt. Somit gelangt das von dem Primärteil erzeugte Magnetfeld ungehindert zur Sekundärwicklung.

Vorzugsweise ist das Gehäuse des Primärteils mehrteilig ausgeführt, wobei ein metallisches Aufnahmeteil ein Oberteil aufnimmt, welches aus Kunststoff ausgeführt ist. Das Aufnahmeteil ist im Aufnahmering aufgenommen und durch die so realisierte Metall-Metall-Verbindung sehr gut wärmeleitend angebunden.

Die Rippen 5 verlaufen vom Aufnahmering 4 aus sternstrahlenförmig, also alle in radialer Richtung, zum Rahmen 6.

In Umfangsrichtung sind die Rippen 5 regelmäßig voneinander beabstandet.

### Bezugszeichenliste

1 Primärteil
2 Kabelzuführung
3 erste Bodenplatte, insbesondere Aufnahmeplatte
4 Aufnahmering
5 Rippe
6 Rahmen
20 zweite Bodenplatte
21 Tragelement, Unterboden
22 Stütze
23 Rohboden
24 Einspeisegerät

## Patentansprüche

1. System zur berührungslosen Übertragung von elektrischer Energie an ein Mobilteil,
**wobei** das System einen Doppelboden aufweist, in welchem ein Primärteil (1) angeordnet ist, **der Doppelboden eine erste Bodenplatte (3) und zweite Bodenplatten (20), Tragelemente (21), Stützen (22) und einen Rohboden (23) aufweist,**
**wobei die Bodenplatten (20) von Tragelementen (21), insbesondere einen Unterboden bildenden Tragelementen (21), aufgenommen sind,**
**wobei die Tragelemente (21) von Stützen (22) über einem Rohboden (23) gehalten sind,**
**dadurch gekennzeichnet, dass**
**die erste Bodenplatte (3) aus Aluminium gefertigt ist,**
**wobei an der Unterseite der ersten Bodenplatte (3) ein Aufnahmering (4), Rippen (5) und ein Rahmen (6) ausgeformt ist,**
**wobei die Rippen (5) vom Aufnahmering (4) sternstrahlenförmig in radialer Richtung zum Rahmen (6) verlaufen**
**wobei der Aufnahmering (4) vom Rahmen (6) beabstandet ist,**
**wobei das Primärteil (1) ein Aufnahmeteil und ein Oberteil aufweist,**
**wobei das Oberteil im Aufnahmeteil aufgenommen ist und im Oberteil eine Primärwicklung angeordnet ist,**
**wobei das Oberteil aus Kunststoff gefertigt ist**
**wobei das Aufnahmeteil aus Aluminium** gefertigt ist,
wobei das Aufnahmeteil im Aufnahmering (4) aufgenommen ist.

2. System nach Anspruch 1,
**dadurch gekennzeichnet, dass**
**der Rahmen (6) umlaufend und/oder geschlossen ausgeführt ist.**

3. System nach mindestens einem der vorangegangenen Ansprüche,
**dadurch gekennzeichnet, dass**
die Rippen (5) in Umfangsrichtung regelmäßig voneinander beabstandet sind.

4. System nach mindestens einem der vorangegangenen Ansprüche,
**dadurch gekennzeichnet, dass**
die Stützen (22) längenveränderlich ausgeführt sind, insbesondere jede Stütze (22) zwei miteinander schraubverbundene Stützenteile aufweisen.

5. System nach mindestens einem der vorangegangenen Ansprüche,
**dadurch gekennzeichnet, dass**
**die Stützen (22) und Tragelemente (21) aus Stahl gefertigt sind.**

6. System nach mindestens einem der vorangegangenen Ansprüche,
**dadurch gekennzeichnet, dass**
das Oberteil eine Primärwicklung aufweist,
insbesondere im Oberteil die Primärwicklung integriert ist.

7. System nach mindestens einem der vorangegangenen Ansprüche,
**dadurch gekennzeichnet, dass**
am Primärteil (1) ein Einspeisegerät (24) angeordnet ist,
wobei das Einspeisegerät (24) mittels eines Kabels versorgt ist und einen Umrichter aufweist, welcher an seinem wechselspannungsseitigen Anschluss mit einem als Gyrator ausgeführten Vierpol verbunden ist, dessen Bauteile, **also** Kondensator und Induktivität, resonant auf die Frequenz der am wechselspannungsseitigen Anschluss bereit gestellten Wechselspannung abgestimmt ist,
wobei die Ausgangsseite des Vierpols die Primärwicklung speist.

## Claims

1. A system for the contactless transmission of electrical energy to a mobile part,
wherein the system has a double floor in which there is arranged a primary part (1),
the double floor has a first floor plate (3) and second floor plates (20), bearing elements (21), supports (22) and a rough floor (23),
wherein the floor plates (20) are received by bearing elements (21), in particular bearing elements (21) forming a lower floor plate,
wherein the bearing elements (21) are held by supports (22) above a rough floor (23),
**characterised in that**
the first floor plate (3) is manufactured from aluminium,
wherein at the underside of the first floor plate (3) there is formed a receiving ring (4), ribs (5) and a frame (6),
wherein the ribs (5) run from the receiving ring (4) to the frame (6) in a radial direction in the manner of the rays of a star,
wherein the receiving ring (4) is spaced apart from the frame (6),
wherein the primary part (1) has a receiving part and an upper part,
wherein the upper part is received in the receiving part and a primary winding is arranged in the upper part,
wherein the upper part is manufactured from a plastics material,
wherein the receiving part is manufactured from aluminium,
wherein the receiving part is received in the receiving ring (4).

2. A system according to claim 1,
**characterised in that**
the frame (6) is encircling and/or closed.

3. A system according to at least one of the preceding claims,
**characterised in that**
the ribs (5) are regularly spaced apart from one another in a circumferential direction.

4. A system according to at least one of the preceding claims,
**characterised in that**
the supports (22) are longitudinally-adjustable, in particular each support (22) has two support parts screw-connected to one another.

5. A system according to at least one of the preceding claims,
**characterised in that**
the supports (22) and bearing elements (21) are manufactured from steel.

6. A system according to at least one of the preceding claims,
**characterised in that**
the upper part has a primary winding,
in particular the primary winding is integrated in the upper part.

7. A system according to at least one of the preceding claims,
**characterised in that**
a feed apparatus (24) is arranged at the primary part (1),
wherein the feed apparatus (24) is supplied by means of a cable and has an inverter which is connected at its connection at the AC side to a quadrupole in the form of a gyrator, whose component parts, therefore capacitor and inductor, are resonantly tuned to the frequency of the alternating voltage provided at the connection at the AC side,
wherein the output side of the quadrupole feeds the primary winding.

## Revendications

1. Système de transmission sans contact d'énergie électrique à une partie mobile,
le système présentant un double plancher, dans lequel est agencée une partie primaire (1),
le double plancher présentant une première plaque de plancher (3) et des deuxièmes plaques de plancher (20), des éléments porteurs (21), des supports (22) et un plancher brut (23),
les plaques de plancher (20) étant reçues par des éléments porteurs (21), notamment des éléments porteurs (21) formant un sous-plancher,
les éléments porteurs (21) étant maintenus par des supports (22) au-dessus d'un plancher brut (23), **caractérisé en ce que**
la première plaque de plancher (3) est fabriquée en aluminium,
un anneau de réception (4), des nervures (5) et un cadre (6) étant formés sur le côté inférieur de la première plaque de plancher (3),
les nervures (5) s'étendant en forme de rayons d'étoile depuis l'anneau de réception (4) dans la direction radiale vers le cadre (6),
l'anneau de réception (4) étant espacé du cadre (6),
la partie primaire (1) présentant une partie de réception et une partie supérieure,
la partie supérieure étant reçue dans la partie de réception et un enroulement primaire étant agencé dans la partie supérieure,
la partie supérieure étant fabriquée en matière plastique,
la partie de réception étant fabriquée en aluminium,
la partie de réception étant reçue dans l'anneau de réception (4).

2. Système selon la revendication 1, **caractérisé en ce que** le cadre (6) est réalisé sous forme périphérique et/ou fermée.

3. Système selon au moins l'une quelconque des revendications précédentes, **caractérisé en ce que** les nervures (5) sont régulièrement espacées les unes des autres dans la direction circonférentielle.

4. Système selon au moins l'une quelconque des revendications précédentes, **caractérisé en ce que** les supports (22) sont réalisés sous forme variable en longueur, notamment chaque support (22) présente deux parties de support reliées entre elles par vis.

5. Système selon au moins l'une quelconque des revendications précédentes, **caractérisé en ce que** les supports (22) et les éléments porteurs (21) sont fabriqués en acier.

6. Système selon au moins l'une quelconque des revendications précédentes, **caractérisé en ce que** la partie supérieure présente un enroulement primaire, notamment l'enroulement primaire est intégré dans la partie supérieure.

7. Système selon au moins l'une quelconque des revendications précédentes, **caractérisé en ce qu'**un appareil d'alimentation (24) est agencé sur la partie primaire (1),
l'appareil d'alimentation (24) étant approvisionné au moyen d'un câble et présentant un convertisseur qui est relié au niveau de sa connexion côté tension alternative à un quadripôle réalisé sous forme de gyrateur, dont les composants, c'est-à-dire le condensateur et l'inductance, sont accordés de manière résonante à la fréquence de la tension alternative fournie au niveau de la connexion côté tension alternative,
le côté sortie du quadripôle alimentant l'enroulement primaire.
